# EUROPEAN PATENT SPECIFICATION

(11) **EP 3 902 036 B1**
(45) Date of publication and mention of the grant of the patent: **08.01.2025**
(21) Application number: 19899524.3
(22) Date of filing: 12.11.2019
(51) Int. Cl.: H01M 4/38, C01B 33/02, H01M 4/36, H01M 4/58, H01M 10/0525, H01M 4/134, H01M 4/136, H01M 4/1395, H01M 4/62, H01M 4/02

(54) **SILICON NANOPARTICLES, NON-AQUEOUS SECONDARY BATTERY NEGATIVE ELECTRODE ACTIVE MATERIAL USING SAID SILICON NANOPARTICLES, AND SECONDARY BATTERY**
SILIZIUMNANOPARTIKEL, NICHTWÄSSRIGES AKTIVES MATERIAL FÜR DIE NEGATIVE ELEKTRODE EINER SEKUNDÄRBATTERIE MIT DIESEN SILIZIUMNANOPARTIKELN UND SEKUNDÄRBATTERIE
NANOPARTICULES DE SILICIUM, MATÉRIAU ACTIF D'ÉLECTRODE NÉGATIVE DE PILE RECHARGEABLE NON AQUEUSE, COMPRENANT LESDITES NANOPARTICULES DE SILICIUM, ET PILE RECHARGEABLE

(30) Priority: 19.12.2018 JP 2018237348
(43) Date of publication of application: 27.10.2021
(73) Proprietor: DIC Corporation, Tokyo 174-8520 (JP)
(72) Inventor: ZHU Peixin, Sakura-shi, Chiba 285-8668 (JP); KAWASE Kenichi, Sakura-shi, Chiba 285-8668 (JP); OOTSUKA Shunichi, Sakura-shi, Chiba 285-8668 (JP); IKUMA Takahito, Sakura-shi, Chiba 285-8668 (JP)
(74) Representative: Schön, Christoph
(86) International application number: PCT/JP2019/044282
(87) International publication number: WO 2020/129467

(56) References cited:
- WO-A1-2014/098070
- WO-A1-2014/128814
- WO-A1-2018/131608
- WO-A1-2019/107336
- JP-A- 2018 106 830
- JP-A- 2018 110 076
- JP-A- 2018 110 076
- JP-A- H11 322 323
- E. A. ODO, D. T. BRITTON, G. G. GONFA AND M. HARTING: "Structure and Characterization of Silicon NanoparticlesProduced Using a Vibratory Disc Mill", THE AFRICAN REVIEW OF PHYSICS, 1 January 2012 (2012-01-01), pages 45 - 56, XP002805304, ISSN: 2223-6589, Retrieved from the Internet <URL:http://lamp.ictp.it/index.php/aphysrev/article/view/525/227> [retrieved on 20220112]

## Description

### Technical Field

The present invention relates to silicon nanoparticles, a negative electrode active material using the same, and a lithium ion secondary battery.

### Background Art

Along with the recent proliferation of mobile electronic devices such as smartphones, there is an increasing demand for small and high-capacity secondary batteries. In particular, lithium ion secondary batteries (sometimes written as LIB) have been gaining a wider range of industrial use and are being rapidly applied to electric vehicles (EV). Carbonaceous graphite active materials (natural and artificial) are widely used as negative electrode materials for lithium ion secondary batteries. Unfortunately, graphites have a low theoretical capacity density (372 mAh/g) and the evolution in the technology of manufacturing lithium ion secondary batteries has come near the limit battery capacity that is feasible.

Silicon (Si) is capable of forming an alloy (an intermetallic compound) with metallic lithium and thus can electrochemically adsorb and release lithium ions. In the case of Li₂Si₅, the theoretical capacity in which lithium ions can be stored and released is 4200 mAh/g, far greater than in graphite negative electrodes.

However, silicon significantly changes its volume by a magnitude of three to four times when it adsorbs and releases lithium ions. Consequently, silicon is collapsed into fine powder by repeatedly expanding and contracting during charging and discharging cycles, thus failing to offer a good cycle life.

It is known that mechanical structural destruction due to insertion/de-insertion of lithium ions can be avoided by reducing the particle size of silicon particles. However, this approach has encountered a new problem. That is, part of the silicon nanoparticles in the electrode material are spatially/electrically isolated to cause a significant decrease in battery life characteristics. Further, such silicon nanoparticles after particle size reduction have a specific surface area as large as several tens of m²/g or more. This increase in specific surface area leads to a corresponding increase in the amount of solid electrolyte interface (hereinafter, written as SEI, the main cause of irreversible capacity generation) formed on the surface during charging and discharging, thus resulting in a significant decrease in initial Coulombic efficiency.

To solve such problems, two-dimensional silicon structures have been developed. Patent Literatures 1 and 2 describe negative electrode materials which include flaky silicon or scaly silicon having an aspect ratio of 1 to 20. Patent Literature 3 describes a layered silicon compound prepared by acid treatment of CaSi₂ in the presence of an alcohol. Further, a silicate layered compound is dissociated and reduced by reaction with metallic Mg to form silicon nano-sheets which attain improvements in charge/discharge characteristics (Non Patent Literature 1).

### Citation List

### Patent Literature

PTL 1: Japanese Unexamined Patent Application Publication No. 2018-110076
PTL 2: Japanese Unexamined Patent Application Publication No. 2018-113187
PTL 3: Japanese Unexamined Patent Application Publication No. 2017-7908

### Non Patent Literature

NPL 1: Song Chen, et al., "Scalable 2D Mesoporous Silicon Nano-sheets for High-Performance Lithium-ion Battery Anode", Small, 2018, 14, 1703361.

### Summary of Invention

### Technical Problem

The scaly or flaky silicons described in Patent Literatures 1 and 2 are coated with carbon such as graphene to improve conductivity. When such silicon is used as a negative electrode material, an electrolytic solution finds its way to the silicon through voids in the carbon layer and SEI is formed on the surface of Si to cause a risk that the long-term charge/discharge performance of the battery may be deteriorated.

The layered silicon compound prepared by the chemical treatment described in Patent Literature 3 has a layered structure which is difficult to perfectly dissociate. Consequently, major problems are that large-sized silicon particles will remain and the elimination of impurities will be difficult. Improvements in cycle characteristics will be therefore limited.

Further, the porous silicon nano-sheets described in Non Patent Literature 1 are obtained by dissociating a layered silicate and reducing the silicate with metallic Mg. The sheets have a very large specific surface area and problematically contain large amounts of Mg-based impurities that remain in the sheets.

In view of the circumstances discussed above, objects of the present invention are to provide silicon nanoparticles for negative electrode active material in nonaqueous secondary batteries which have excellent charge/discharge characteristics (charging/discharging capacities, initial Coulombic efficiency and cycle characteristics), and to provide a negative electrode active material for nonaqueous secondary batteries which uses the silicon nanoparticles, and a secondary battery.

### Solution to Problem

To achieve the objects described above, the present inventors carried out extensive studies in which the shape and surface state of silicon particles were controlled so as to take full advantage of the high capacity characteristics of silicon, while also focusing on the configuration of a negative electrode active material in which the silicon particles were embedded. As a result, the present inventors have invented silicon nanoparticles satisfying specific conditions (such as surface state, size and shape), and have found that a negative electrode active material in which the silicon particles are embedded in a silicon inorganic compound has specific chemical bonds of silicon element and exhibits excellent charge/discharge characteristics, thereby completing the present invention.

Specifically, the present invention pertains to silicon nanoparticles for negative electrode active material in lithium ion secondary batteries characterized in that the silicon nanoparticles have a length in the major axis direction of
70 to 300 nm, a thickness of 15 to 70 nm or less and a thickness/length ratio of not more than 0.5.

The present invention also pertains to a negative electrode active material for lithium ion secondary batteries which includes the silicon nanoparticles of the present invention and a silicon inorganic compound in which the silicon nanoparticles are embedded, the silicon inorganic compound having a ²⁹Si-NMR peak assigned to SiC₄ bond structural units and having an equivalent composition ratio [SiC₄ bonds/(SiC₄ bond structural units + D units (SiO₂C₂) + T units (SiO₃C) + Q units (SiO₄))] in the range of 0.05 to 0.55.

The present invention also pertains to a negative electrode including the negative electrode active material of the present invention.

The present invention also pertains to a secondary battery that includes a negative electrode including the negative electrode active material of the present invention.

The negative electrode active material including the silicon nanoparticles of the present invention can offer excellent charge/discharge characteristics. Specifically, high levels of charging/discharging capacities, initial Coulombic efficiency and cycle characteristics can be obtained at the same time.

### Brief Description of Drawings

[Fig. 1] Fig. 1 is a transmission electron microscope (TEM) image of silicon nanoparticles of EXAMPLE 1.
[Fig. 2] Fig. 2 is a chart diagram illustrating a ²⁹Si-NMR spectrum of the silicon nanoparticles of EXAMPLE 1. Description of Embodiments

Hereinbelow, the present invention will be described in detail without limiting the scope of the present invention to embodiments described below. In the following embodiments, the constituent elements (including element steps and the like) are not essential unless otherwise specified. Numerical values and numerical ranges are similarly not essential unless otherwise mentioned and do not limit the scope of the present invention thereto. Various changes and modifications are possible within the scope of the technical idea disclosed in this specification.

The present invention provides the following inventive items.
1. Silicon nanoparticles for negative electrode active material in lithium ion secondary batteries, wherein the silicon nanoparticles have a length in the major axis direction of 70 to 300 nm and a thickness of 15 to 70 nm or less.
2. The silicon nanoparticles described in 1 for negative electrode active material in lithium ion secondary batteries, wherein the silicon nanoparticles have a thickness/length ratio of not more than 0.5.
3. A negative electrode active material for lithium ion secondary batteries including the silicon nanoparticles described in 1 or 2 and a silicon inorganic compound in which the silicon nanoparticles are embedded, the silicon inorganic compound having a ²⁹Si-NMR peak assigned to SiC₄ bond structural units and having an equivalent composition ratio [SiC₄ bonds/(SiC₄ bond structural units + D units (SiO₂C₂) + T units (SiO₃C) + Q units (SiO₄))] in the range of 0.05 to 0.55.
4. The negative electrode active material for lithium ion secondary batteries described in 3, wherein the weight loss by pyrolysis in air up to 1000°C is in the range of not less than 5 mass% and not more than 60 mass%.
5. The negative electrode active material for lithium ion secondary batteries described in 3 or 4, wherein the volume average particle size (D50) is 1.0 µm to 20 µm, and the specific surface area determined by nitrogen adsorption measurement is 1.0 m²/g to 20 m²/g.
6. A negative electrode for lithium ion secondary batteries including the negative electrode active material for lithium ion batteries described in any one of 3 to 5.
7. A lithium ion secondary battery including the negative electrode described in 6.

In a lithium ion negative electrode active material which includes a silicon inorganic compound including the silicon nanoparticles of the present invention, as described hereinabove, the silicon nanoparticles have a small size and a specific morphology and contain an appropriate amount of SiC₄ structures. The collapse of silicon into fine powder during charging and discharging is highly prevented, and the silicon particles by virtue of having a sheet shape will show relatively small volume expansion in the thickness direction. Thus, it will be possible to effectively reduce the volume change of the negative electrode active material in which the silicon nanoparticles are dispersed. Further, SiC₄ structure layers are easily formed on and around the surface of the silicon nanoparticles and sometimes play a role of suppressing the formation of SEI, and consequently the negative electrode active material will attain significant enhancements in charge/discharge characteristics (charging/discharging capacities, initial Coulombic efficiency and cycle characteristics).

### <Silicon nanoparticles>

The silicon nanoparticles of the present invention may have a ²⁹Si-nuclear magnetic resonance (hereinafter, NMR) peak which has a half width of 20 ppm to 50 ppm centered at about -80 ppm and is broad ranging from 50 ppm to -150 ppm. The silicon nanoparticles of the present invention have a length in the major axis direction of 70 to 300 nm and a thickness of 15 to 70 nm or less.

As described above, the peak may have a certain width (distribution) centered at the highest peak intensity (ppm) and tails off from the central peak top toward 0 ppm and/or -200 ppm. This profile suggests the presence of chemical bonds other than elemental silicon.

The peak near -80 ppm is assigned to the structure of elemental silicon. About this peak as the center, the ²⁹Si-NMR spectrum may have a half width of 20 ppm to 50 ppm and usually broadens from 50 ppm to -150 ppm. This profile indicates that the particles have silicon chemically bonded as elemental silicon in the major proportion and also have silicon chemically bonded in a variety of states. According to basic knowledge of NMR of organosilicon compounds, the silicon nanoparticles of the present invention probably have, on the surface thereof, trace amounts of specific structures such as organosilanes (basic chemical bond constituent unit: Si-R) and siloxanes (basic chemical bond constituent units: Si-O-(R₁, R₂, R₃); Si-O₂-(R₁, R₂); Si-O₃-R) . These functional groups (R, R₁, R₂, R₃) are not particularly limited and may be, for example, hydroxyl groups, carboxy groups, amino groups, amide groups or azo groups. While it is difficult to quantitatively identify the chemical bond constituents described above due to factors such as the limit of analyzer accuracy, this constituent characteristic is clearly correlated with the steps in which the silicon nanoparticles are obtained.

A ²⁹Si-NMR spectrum of a powder sample is easily obtained using a solid-state NMR spectrometer. The solid-state NMR measurement in this specification is performed with an apparatus (JNM-ECA600) manufactured by JEOL Ltd.

When a ²⁹Si-NMR spectrum is measured with a solid-state NMR spectrometer having a higher resolution, the single peak in the chart which has the highest intensity at about -80 ppm and tails off from the peak top will be divided in the tailing region.

The silicon nanoparticles of the present invention preferably have a thickness/length ratio (so-called aspect ratio) of not more than 0.5. Large-sized silicon particles which have a thickness/length ratio exceeding the above range are large lumps and are easily collapsed into fine powder during charging and discharging, and consequently the active material will tend to lower its charge/discharge performance. On the other hand, small-sized silicon particles which have a thickness/length ratio outside the above range are so fine and are easily aggregated with one another. Consequently, it is difficult to disperse such small-sized silicon particles uniformly in the active material. Further, such small-sized silicon particles have higher surface active energy and impurities such as byproducts tend to be formed in large amounts on the surface of the small particles during high-temperature firing of the active material. Such impurities cause a significant decrease in charge/discharge performance.

Regarding the morphology of the silicon nanoparticles, the average particle size may be measured by a dynamic light scattering method. The morphology (size, shape, etc.) of a sample such as the thickness/length ratio described above may be identified more easily and precisely by the use of an analytical technique such as a transmission electron microscope (TEM) or a field emission scanning electron microscope (FE-SEM). In the case where the silicon nanoparticles are embedded in a negative electrode active material powder, a sample may be cut with a focused ion beam (FIB) and the cross section may be observed by FE-SEM, or a sample may be sliced and the cross section may be observed by TEM to identify the state of the silicon particles.

The range of the size of the silicon nanoparticles defined in the present invention is a result of calculation based on 50 particles in a major portion of a sample in the field of view seen in a TEM image. In consideration of the limit of observation field of view, the silicon particles of the present invention may have a size outside the range described hereinabove.

The silicon nanoparticles of the present invention may be used by being added to a known conventional negative electrode active material. The negative electrode active material in the present invention includes the silicon nanoparticles described hereinabove and an additional silicon inorganic compound, and preferably has a structure in which the silicon nanoparticles are embedded in the additional silicon inorganic compound. Examples of the additional silicon inorganic compounds for embedding the silicon nanoparticles include SiC (silicon carbide) and SiOC (silicon oxycarbide).

The negative electrode active material that includes the silicon nanoparticles of the present invention and a silicon inorganic compound in which the silicon nanoparticles are embedded has a ²⁹Si-NMR peak assigned to SiC₄ bond structural units, and has an equivalent composition ratio [SiC₄ bonds/(SiC₄ bond structural units + D units (SiO₂C₂) + T units (SiO₃C) + Q units (SiO₄))] in the range of 0.05 to 0.55. The SiC₄ chemical bonds are assigned to silicon carbide structures, and thus the equivalent composition ratio of SiC₄ is a parameter that directly reflects the relative amount of silicon carbide.

The equivalent composition ratio of SiC₄ is preferably in the range of 0.05 to 0.55. If the ratio is lower than 0.05, the relative amount of silicon carbide is insufficient and does not offer sufficient protective effects on the silicon nanoparticles during charging/discharging to let SEI form and cause a decrease in cycle performance in some cases. If, on the other hand, the ratio is greater than 0.55, the relative amount of silicon carbide that cannot react with lithium ions is increased to give rise to a risk that the charging/discharging capacities and the initial Coulombic efficiency may be markedly lowered, although the cycle performance is significantly improved.

The negative electrode active material of the present invention contains free carbon which is easily pyrolyzed in air. Thus, the amount of free carbon that is present may be calculated from the thermal weight loss. The pyrolysis weight loss is easily identified using a thermogravimeter-differential thermal analyzer (TG-DTA).

Free carbon is pyrolyzed in air at a range of temperatures of about 600°C to 900°C to give rise to a rapid weight loss. The maximum temperature during the TG-DTA measurement is not particularly limited. It is, however, preferable that the TG-DTA measurement be performed in air at temperatures of up to 1000°C in order to complete the pyrolysis reaction. For the reason described above, the value of weight loss that is obtained indicates the amount of free carbon decomposed. The amount of carbon in the present invention is in the range of 5 mass% to 60 mass%, and more preferably 8 mass% to 50 mass%.

The negative electrode active material of the present invention preferably has a volume average particle size (D50) of 1.0 µm to 20 µm, and more preferably 1.0 µm to 15 µm. When the volume average particle size of the negative electrode active material is 1.0 µm or more, the negative electrode active material tends to have a sufficient tap density and tends to attain good applicability when formed into a negative electrode active material slurry. When, on the other hand, the volume average particle size of the negative electrode active material is 20 µm or less, the negative electrode active material allows lithium ions to diffuse over a moderate distance from the surface to the inside of the negative electrode active material, and consequently the input/output characteristics of secondary batteries tend to be maintained at a good level.

The volume average particle size (D50) of the negative electrode active material is the particle size at 50% in a volume cumulative distribution curve in which the particle sizes of the negative electrode active material are accumulated from small diameters. The volume average particle size (D50) may be measured with a laser diffraction grain size distribution analyzer (for example, SALD-3000J manufactured by Shimadzu Corporation).

In the negative electrode active material of the present invention, the specific surface area determined by BET (Brunauer-Emmett-Teller) nitrogen adsorption measurement is preferably 1.0 m²/g to 20 m²/g, more preferably 2 m²/g to 10 m²/g, and still more preferably 2 m²/g to 5 m²/g. If the specific surface area of the negative electrode active material is 20 m²/g or more, larger amounts of an electrolytic solution and a binder are consumed to cause a risk that the operation of an actual battery may be adversely affected.

The BET measurement may be easily performed using a general specific surface area measuring device.

Both the technical effects described hereinabove may be achieved by controlling the volume average particle size (D50) to 1.0 µm to 20 µm and the specific surface area determined by nitrogen adsorption measurement to 1.0 m²/g to 20 m²/g.

### <Description of production method>

A method for producing the negative electrode active material of the present invention will be described below.

### <Preparation of silicon nanoparticle suspension>

The silicon nanoparticles of the present invention may be produced by any method without limitation. The silicon may be synthesized by a build-up process or may be crushed by a break-down process. Silicon nanoparticles obtained by a build-up process may be surface-modified with an organic silane as a surfactant for purposes such as to prevent the excessive oxidation of the silicon surface. When a crushing-type break-down process is performed with a wet pulverizer, a dispersant may be used to facilitate the crushing of silicon particles in an organic solvent. The wet pulverizer is not particularly limited, with examples including roller mills, jet mills, high-speed rotary pulverizers, container driven-type mills and bead mills.

Any solvent may be used in the wet production process. Any organic solvent that does not chemically react with silicon may be used without limitation. Examples include ketones such as acetone, methyl ethyl ketone, methyl isobutyl ketone and diisobutyl ketone; alcohols such as ethanol, methanol, normal propyl alcohol and isopropyl alcohol; and aromatics such as benzene, toluene and xylene.

The type of the dispersant in the production process is not particularly limited. A known conventional aqueous or nonaqueous commercial product may be used. A nonaqueous dispersant is preferably used in order to avoid excessive oxidation of the surface of silicon particles. Examples of the types of nonaqueous dispersants include high-molecular types (such as polyether type, polyalkylene polyamine type and polycarboxylic acid partial alkyl ester type), low-molecular types (such as polyhydric alcohol ester type and alkyl polyamine type), and inorganic polyphosphate types.

### <Preparation of negative electrode active material precursor>

The negative electrode active material of the present invention may be produced by any method without limitation. When a wet process is adopted, for example, the negative electrode active material of the present invention may be produced through Step 1 in which the silicon nanoparticle suspension described above, a polysiloxane compound and a carbon source resin are mixed and dispersed together and then dried to give a mixture, Step 2 in which the mixture obtained in Step 1 is fired in an inert atmosphere to give a fired product, and Step 3 in which the fired product obtained in Step 2 is crushed to give a negative electrode active material. By this production method, a negative electrode active material may be easily obtained which contains carbon and has a structure in which the silicon nanoparticles are embedded in the silicon inorganic compound.

### <Description of steps>

### <Step 1>

The concentration of the silicon nanoparticle suspension described above is not particularly limited, but may be in the range of 5 to 40 mass%, and more preferably controlled to 10 to 30 mass%.

The polysiloxane compound used in the preparation of the negative electrode active material of the present invention is not particularly limited as long as the compound is a resin containing at least one of polycarbosilane, polysilazane, polysilane and polysiloxane structures. The compound may be a resin having one of these structures, or may be a composite resin having any of the above structures as a segment and an additional polymer segment chemically bonded to the segment. Such composite resins may take forms of copolymers such as graft, block, random and alternate copolymers. Examples of the composite resins include those which have graft structures chemically bonded to side chains of a polysiloxane segment and a polymer segment, and those which have a block structure in which a polysiloxane segment is chemically bonded to an end of a polymer segment.

The polysiloxane segment preferably has structural units represented by the following general formula (S-1) and/or the following general formula (S-2). 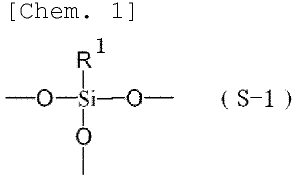 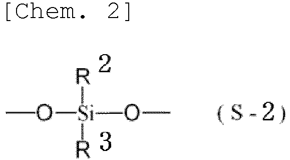 (In the general formulas (S-1) and (S-2), R1 denotes an aromatic hydrocarbon substituent or an alkyl group. R2 and R3 each denote an alkyl group, a cycloalkyl group, an aryl group or an aralkyl group.)

Examples of the alkyl groups include methyl group, ethyl group, propyl group, isopropyl group, butyl group, isobutyl group, sec-butyl group, tert-butyl group, pentyl group, isopentyl group, neopentyl group, tert-pentyl group, 1-methylbutyl group, 2-methylbutyl group, 1,2-dimethylpropyl group, 1-ethylpropyl group, hexyl group, isohexyl group, 1-methylpentyl group, 2-methylpentyl group, 3-methylpentyl group, 1,1-dimethylbutyl group, 1,2-dimethylbutyl group, 2,2-dimethylbutyl group, 1-ethylbutyl group, 1,1,2-trimethylpropyl group, 1,2,2-trimethylpropyl group, 1-ethyl-2-methylpropyl group and 1-ethyl-1-methylpropyl group. Examples of the cycloalkyl groups include cyclopropyl group, cyclobutyl group, cyclopentyl group and cyclohexyl group.

Examples of the aryl groups include phenyl group, naphthyl group, 2-methylphenyl group, 3-methylphenyl group, 4-methylphenyl group, 4-vinylphenyl group and 3-isopropylphenyl group.

Examples of the aralkyl groups include benzyl group, diphenylmethyl group and naphthylmethyl group.

Examples of the additional polymer segments which may be present together with the polysiloxane segments in the polysiloxane compounds include vinyl polymer segments such as acrylic polymers, fluoroolefin polymers, vinyl ester polymers, aromatic vinyl polymers and polyolefin polymers, and other polymer segments such as polyurethane polymer segments, polyester polymer segments and polyether polymer segments. In particular, vinyl polymer segments are preferable.

The polysiloxane compound may be a composite resin in which a polysiloxane segment and a polymer segment are bonded together to have a structure represented by the following structural formula (S-3). Such a composite resin may have a three-dimensional network polysiloxane structure. 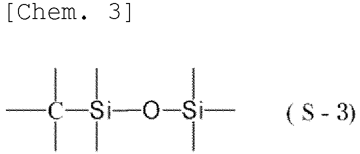 (In the formula, the carbon atom is a carbon atom constituting the polymer segment, and the two silicon atoms are silicon atoms constituting the polysiloxane segment.)

The polysiloxane segment present in the polysiloxane compound may have a thermally reactive functional group such as a polymerizable double bond in the polysiloxane segment. Before pyrolysis, such a polysiloxane compound may be heat-treated to undergo crosslinking reaction into a solid. In this manner, the pyrolysis treatment may be facilitated.

Examples of the polymerizable double bonds include vinyl groups and (meth)acryloyl groups. The polysiloxane segment preferably has 2 or more polymerizable double bonds, more preferably 3 to 200 polymerizable double bonds, and still more preferably 3 to 50 polymerizable double bonds. The polysiloxane compound may be easily crosslinked when the compound is a composite resin having 2 or more polymerizable double bonds.

The polysiloxane segment may have a silanol group and/or a hydrolyzable silyl group. Examples of the hydrolyzable groups in the hydrolyzable silyl groups include halogen atoms, alkoxy groups, substituted alkoxy groups, acyloxy groups, phenoxy groups, mercapto groups, amino groups, amide groups, aminooxy groups, iminooxy groups and alkenyloxy groups. By the hydrolysis of these groups, the hydrolyzable silyl groups convert to silanol groups. In parallel with the thermosetting reaction, hydrolysis condensation reaction proceeds between the hydroxyl groups in the silanol groups and/or the hydrolyzable groups in the hydrolyzable silyl groups to result in a solid polysiloxane compound.

The silanol group referred to in the present invention is a silicon-containing group which has a hydroxyl group directly bonded to a silicon atom. The hydrolyzable silyl group referred to in the present invention is a silicon-containing group which has a hydrolyzable group directly bonded to a silicon atom, and may be, for example, a group specifically represented by the following general formula (S-4) . 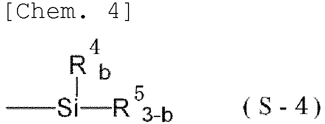 (In the formula, R4 is a monovalent organic group such as an alkyl group, an aryl group or an aralkyl group, and R5 is a halogen atom, an alkoxy group, an acyloxy group, an allyloxy group, a mercapto group, an amino group, an amide group, an aminooxy group, an iminooxy group or an alkenyloxy group. The letter b is an integer of 0 to 2.)

Examples of the alkyl groups include methyl group, ethyl group, propyl group, isopropyl group, butyl group, isobutyl group, sec-butyl group, tert-butyl group, pentyl group, isopentyl group, neopentyl group, tert-pentyl group, 1-methylbutyl group, 2-methylbutyl group, 1,2-dimethylpropyl group, 1-ethylpropyl group, hexyl group, isohexyl group, 1-methylpentyl group, 2-methylpentyl group, 3-methylpentyl group, 1,1-dimethylbutyl group, 1,2-dimethylbutyl group, 2,2-dimethylbutyl group, 1-ethylbutyl group, 1,1,2-trimethylpropyl group, 1,2,2-trimethylpropyl group, 1-ethyl-2-methylpropyl group and 1-ethyl-1-methylpropyl group.

Examples of the aryl groups include phenyl group, naphthyl group, 2-methylphenyl group, 3-methylphenyl group, 4-methylphenyl group, 4-vinylphenyl group and 3-isopropylphenyl group.

Examples of the aralkyl groups include benzyl group, diphenylmethyl group and naphthylmethyl group.

Examples of the halogen atoms include fluorine atom, chlorine atom, bromine atom and iodine atom.

Examples of the alkoxy groups include methoxy group, ethoxy group, propoxy group, isopropoxy group, butoxy group, secondary butoxy group and tertiary butoxy group.

Examples of the acyloxy groups include formyloxy, acetoxy, propanoyloxy, butanoyloxy, pivaloyloxy, pentanoyloxy, phenylacetoxy, acetoacetoxy, benzoyloxy and naphthoyloxy.

Examples of the allyloxy groups include phenyloxy and naphthyloxy.

Examples of the alkenyloxy groups include vinyloxy group, allyloxy group, 1-propenyloxy group, isopropenyloxy group, 2-butenyloxy group, 3-butenyloxy group, 2-pentenyloxy group, 3-methyl-3-butenyloxy group and 2-hexenyloxy group.

Examples of the polysiloxane segments having structural units represented by the general formula (S-1) and/or the general formula (S-2) include those having the following structures.

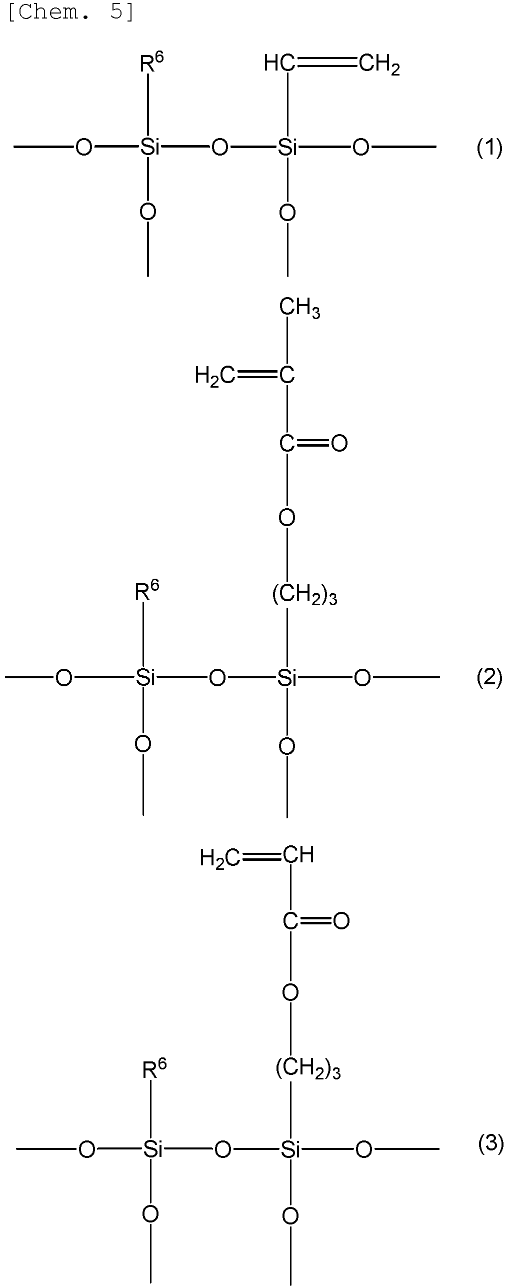

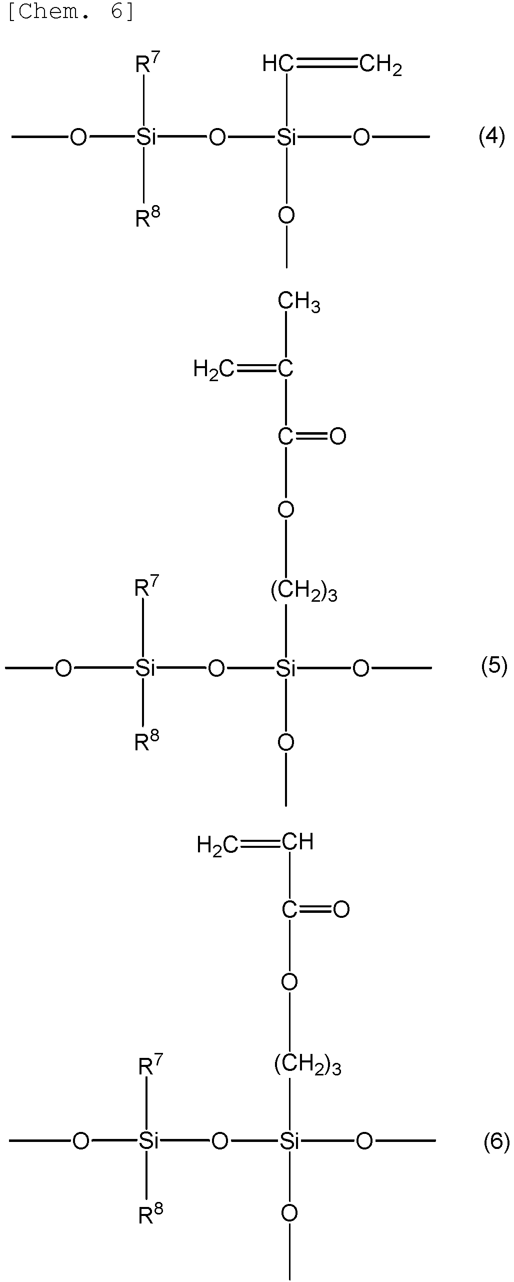

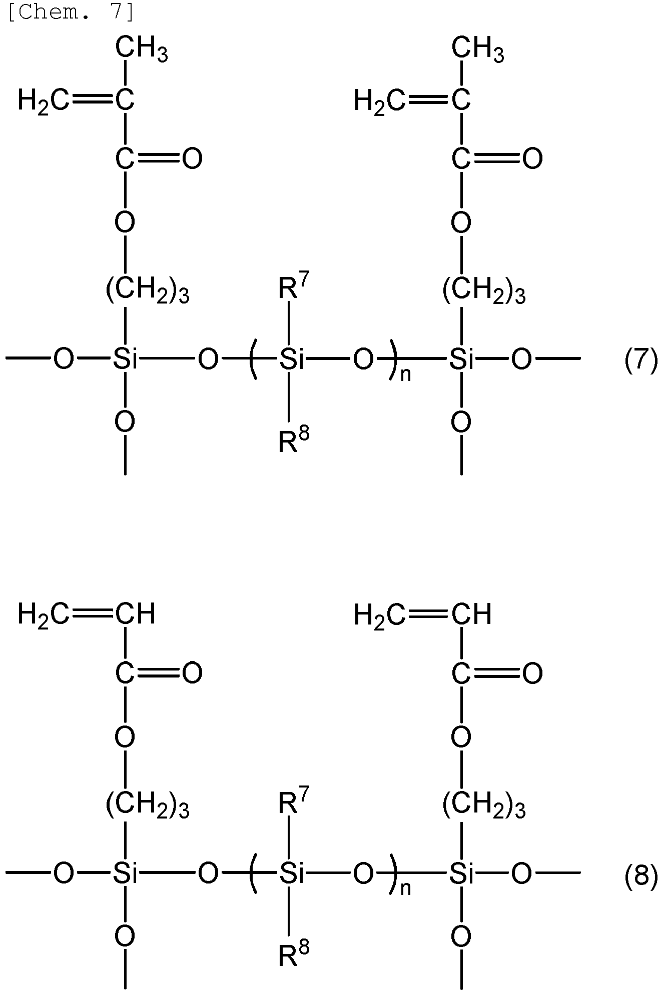

The polymer segment may have various functional groups as required while ensuring that the advantageous effects of the present invention are not impaired. Examples of such functional groups include carboxyl groups, blocked carboxyl groups, carboxylic acid anhydride groups, tertiary amino groups, hydroxyl groups, blocked hydroxyl groups, cyclocarbonate groups, epoxy groups, carbonyl groups, primary amide groups, secondary amides, carbamate groups, and functional groups represented by the following structural formula (S-5):

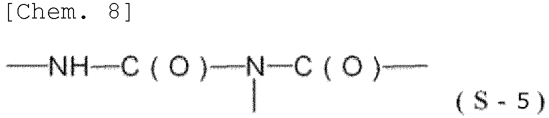

Further, the polymer segment may have polymerizable double bonds such as vinyl groups or (meth)acryloyl groups.

The polysiloxane compound used in the present invention may be produced by a known method and may be particularly preferably produced by any of the methods (1) to (3) described below. However, the production methods are not limited thereto.

(1) As a raw material of the polymer segment described hereinabove, a polymer segment is prepared beforehand which contains a silanol group and/or a hydrolyzable silyl group. This polymer segment and a silane compound including a silane compound which has a silanol group and/or a hydrolyzable silyl group, and a polymerizable double bond are mixed together. The mixture is subjected to hydrolysis condensation reaction.
(2) As a raw material of the polymer segment described hereinabove, a polymer segment is prepared beforehand which contains a silanol group and/or a hydrolyzable silyl group. Separately, a silane compound including a silane compound which has a silanol group and/or a hydrolyzable silyl group, and a polymerizable double bond is subjected to hydrolysis condensation reaction to form a polysiloxane. The polymer segment and the polysiloxane are mixed together, and the mixture is subjected to hydrolysis condensation reaction.
(3) The polymer segment described above, a silane compound including a silane compound which has a silanol group and/or a hydrolyzable silyl group, and a polymerizable double bond, and a polysiloxane are mixed together, and the mixture is subjected to hydrolysis condensation reaction.

The carbon source resin is not particularly limited as long as it exhibits good miscibility with the polysiloxane compound at the time of preparation of the precursor and may be carbonized by firing at a high temperature in an inert atmosphere. It is preferable to use a synthetic resin or natural chemical ingredient having an aromatic functional group. It is more preferable to use a phenol resin from the points of view of inexpensiveness and impurity removal.

Examples of the synthetic resins include thermoplastic resins such as polyvinyl alcohols and polyacrylic acids, and thermosetting resins such as phenol resins and furan resins. Examples of the natural chemical ingredients include heavy oils, especially tar pitches such as coal tars, tar light oils, tar middle oils, tar heavy oils, naphthalene oils, anthracene oils, coal tar pitches, pitch oils, mesophase pitches, oxygen-crosslinked petroleum pitches and heavy oils.

In the precursor preparation step, a precursor is obtained by uniformly mixing the silicon nanoparticle suspension, the polysiloxane compound and the carbon source resin, followed by removing of the solvent and drying. The raw materials may be mixed together in any manner without limitation using a general device having a dispersing/mixing function. In particular, for example, a stirrer, an ultrasonic mixer or a premix disperser may be used. The solvent removal and drying operations are aimed at distilling away the organic solvent, and may be performed with a device such as a dryer, a vacuum dryer or a spray dryer.

The negative electrode active material precursor is preferably prepared in a controlled manner so that the mass contents are 3 to 50 mass% for the silicon nanoparticles, 15 to 85 mass% for the solid content of the polysiloxane compound, and 3 to 70 mass% for the solid content of the carbon source resin, and more preferably the mass contents are 8 to 40 mass% for the solid content of the silicon nanoparticles, 20 to 70 mass% for the solid content of the polysiloxane compound, and 3 to 60 mass% for the solid content of the carbon source resin.

### <Step 2>

In Step 2, the negative electrode active material precursor is fired at a high temperature in an inert atmosphere to completely decompose thermally decomposable organic components and to fire the other major components into a fired product suited as a negative electrode active material of the present invention while precisely controlling the firing conditions. Specifically, the "Si-O" bonds present in the polysiloxane compound as a raw material are caused to undergo dehydration condensation reaction by energy of the high-temperature treatment to form "Si-O-C" skeleton structures (hereinafter, written as SiOC), and the carbon source resin uniformly dispersed is carbonized and converted into free carbon in the three-dimensional structure having the "Si-O-C" skeletons.

In Step 2 described above, the precursor obtained in Step 1 is fired in an inert atmosphere based on a firing program which specifies conditions such as the heat-up rate and the amount of holding time at a predetermined temperature. The maximum temperature is the highest temperature that is preset, and has a strong influence on the structure and performance of the negative electrode active material that is the fired product. The maximum temperature in the present invention is preferably 900°C to 1250°C, and more preferably 1000°C to 1150°C. This range of firing temperatures allows for precise control of the microscopic structure of the negative electrode active material that holds the aforementioned silicon-carbon chemical bond states, and also ensures that still enhanced charge/discharge characteristics will be obtained by avoiding the oxidation of silicon particles stemming from superhigh-temperature firing.

The firing may be performed in any manner without limitation in the atmosphere using a reaction device having a heating function. The treatment may be continuous or batchwise. The firing apparatus may be selected appropriately in accordance with the purpose from among devices such as fluidized bed reaction furnaces, rotary furnaces, vertical moving bed reaction furnaces, tunnel furnaces, batch furnaces and rotary kilns.

### <Step 3>

The fired product obtained in Step 2 may be used directly as the negative electrode active material. To enhance the handleability during the production of a negative electrode and to improve the negative electrode performance, the fired product is preferably treated to select particles having an appropriate particle size and an appropriate surface area. This Step 3 is an optional step for such a purpose, and the fired product obtained in Step 2 is crushed and optionally classified as required to give a negative electrode active material of the present invention. The fired product may be crushed to the target particle size in one stage or in multiple stages. When, for example, the fired product is 10 mm or larger lumps or particle aggregates and the target size of the active material is 10 µm, the fired product may be roughly crushed with a jaw crusher, a roll crusher or the like into approximately 1 mm particles, which may be then crushed to 100 µm with a grow mill, a ball mill or the like and to 10 µm with a bead mill, a jet mill or the like. The crushed particles include coarse particles in some cases. To remove such coarse particles and/or to control the particle size distribution by removing fine particles, classification may be performed. The classifier that is used may be selected in accordance with the purpose from among devices such as wind classifiers and wet classifiers. When coarse particles are to be removed, a classifying process which passes the particles through a sieve is preferable for the reason that the purpose can be reliably achieved. It is needless to mention that the crushing step may be omitted when the precursor mixture is treated before firing so as to control the shape to near the target particle size by spray drying or the like and such shapes are fired.

In the negative electrode active material of the present invention obtained by the above production method, the average particle size (according to a dynamic light scattering method) is preferably 1 to 20 µm, and more preferably 1 µm to 15 µm for the reason that excellent handleability and negative electrode performance are obtained.

### fabrication of negative electrode>

As described hereinabove, the negative electrode active material of the present invention exhibits excellent charge/discharge characteristics and thus allows a battery negative electrode that contains it to exhibit good charge/discharge characteristics.

Specifically, the negative electrode active material of the present invention and an organic binder as essential components, and optionally additional components such as a conductive auxiliary may be formed into a slurry, and the slurry may be applied to form a thin film on a copper foil current collector, thereby producing a negative electrode. In the fabrication of a negative electrode, a known conventional carbon material such as graphite may be added to the slurry.

Examples of the carbon materials such as graphites include natural graphites, artificial graphites, hard carbons and soft carbons. The negative electrode thus obtained contains the negative electrode active material of the present invention as an active material and thus can serve as a secondary battery negative electrode which has a high capacity and excellent cycle characteristics and also has excellent initial Coulombic efficiency. For example, the negative electrode may be obtained by kneading the negative electrode active material for secondary batteries and a binder that is an organic binder together with a solvent with use of a dispersing device such as a stirrer, a ball mill, a super sand mill or a pressure kneader to form a negative electrode mixture slurry, and applying the slurry to a current collector to form a negative electrode layer. Alternatively, a negative electrode mixture slurry in the form of a paste may be formed into a shape such as a sheet or pellets and the shape may be combined with a current collector into a unit as a negative electrode.

The organic binder is not particularly limited. Examples thereof include styrene-butadiene rubber copolymers (SBR); (meth)acrylic copolymers formed of ethylenically unsaturated carboxylic acid esters (such as, for example, methyl (meth)acrylate, ethyl (meth)acrylate, butyl (meth)acrylate, (meth)acrylonitrile and hydroxyethyl (meth)acrylate) and ethylenically unsaturated carboxylic acids (such as, for example, acrylic acid, methacrylic acid, itaconic acid, fumaric acid and maleic acid); and polymer compounds such as polyvinylidene fluoride, polyethylene oxide, polyepichlorohydrin, polyphosphazene, polyacrylonitrile, polyimide, polyamideimide and carboxymethylcellulose (CMC).

Depending on their physical properties, the above organic binders may be aqueous dispersions or solutions, or solutions in organic solvents such as N-methyl-2-pyrrolidone (NMP). In the negative electrode for lithium ion secondary batteries, the content of the organic binder in the negative electrode layer is preferably 1 to 30 mass%, more preferably 2 to 20 mass%, and still more preferably 3 to 15 mass%.

When the content of the organic binder is 1 mass% or more, the adhesion is enhanced and the negative electrode structure is more reliably protected from collapse due to expansion/contraction during charging/discharging. On the other hand, limiting the content to 30 mass% or less reduces the increase in electrode resistance more efficiently.

In the process, the negative electrode active material of the present invention exhibits high chemical stability and can be used together with an aqueous binder. This fact facilitates handling in practical use.

Where necessary, the negative electrode mixture slurry may contain a conductive auxiliary. Examples of the conductive auxiliaries include carbon blacks, graphites, acetylene blacks, and conductive oxides and nitrides. The conductive auxiliary may be used in an amount of about 1 to 15 mass% relative to the negative electrode active material of the present invention.

The material and shape of the current collector are not particularly limited. For example, use may be made of a strip such as a foil, a perforated foil or a mesh of a material such as copper, nickel, titanium or stainless steel. Other materials such as porous materials, for example, porous metals (foamed metals), and carbon paper are also usable.

The negative electrode mixture slurry may be applied to the current collector by any known method without limitation. Examples of the application methods include metal mask printing methods, electrostatic coating methods, dip coating methods, spray coating methods, roll coating methods, doctor blade methods, gravure coating methods and screen printing methods. After the application, rolling treatment is preferably performed as required using a flat plate press, a calendar roll or the like.

The negative electrode mixture slurry formed into a shape such as a sheet or pellets may be integrated with the current collector by a known method such as, for example, rolling, pressing or a combination thereof.

The negative electrode layer formed on the current collector, or the negative electrode layer integrated with the current collector is preferably heat treated in accordance with the type of the organic binder used. When, for example, the binder used is a known conventional aqueous binder such as of styrene-butadiene rubber copolymer (SBR), heat treatment may be performed at 100 to 130°C. When the binder used is an organic binder containing polyimide or polyamideimide as the main skeleton, heat treatment is preferably performed at 150 to 450°C.

The heat treatment removes the solvent and cures the binder to offer increased strength, and enhances the adhesion between the particles and between the particles and the current collector. To prevent the oxidation of the current collector during the treatment, the heat treatment is preferably performed in an inert atmosphere such as helium, argon or nitrogen, or in vacuum atmosphere.

After the heat treatment, the negative electrode is preferably pressed (subjected to pressure treatment). In the secondary battery negative electrode using the negative electrode active material of the present invention, the electrode density is preferably 1.0 to 1.8 g/cm³, more preferably 1.1 to 1.7 g/cm³, and still more preferably 1.2 to 1.6 g/cm³. The higher the electrode density, the more the adhesion and the volumetric capacity density of the electrode tend to improve. If, however, the density is too high, the electrode contains less voids and the volume expansion of silicon and other materials is less effectively suppressed, thus causing a decrease in cycle characteristics. An optimum density is thus to be selected.

### <Configuration of full battery>

The negative electrode using the negative electrode active material of the present invention has excellent charge/discharge characteristics as described hereinabove, and thus may be used in any secondary batteries without limitation. It is, however, preferable that the negative electrode be used in a nonaqueous electrolyte secondary battery or a solid electrolyte secondary battery. In particular, the negative electrode exhibits excellent performance when used in a nonaqueous electrolyte secondary battery.

A battery of the present invention is characterized by using the negative electrode of the present invention described hereinabove. For example, a wet electrolyte secondary battery may be manufactured by arranging a positive electrode and the negative electrode of the present invention opposed to each other via a separator, and pouring an electrolytic solution.

The positive electrode may be obtained by forming a positive electrode layer on the surface of a current collector in the same manner as the negative electrode. In this case, the current collector may be a metal or an alloy such as aluminum, titanium or stainless steel, in the form of a strip shape such as a foil, a perforated foil or a mesh.

The positive electrode material used in the positive electrode layer is not particularly limited. When, in particular, the nonaqueous electrolyte secondary battery that is to be manufactured is a lithium ion secondary battery, for example, a metal compound, a metal oxide, a metal sulfide or a conductive polymer material capable of being doped with or intercalating lithium ions may be used without limitation. For example, among others, lithium cobalt oxide (LiCoO₂), lithium nickel oxide (LiNiO₂), lithium manganese oxide (LiMnO₂), composites of these oxides (LiCoₓNi_{y}Mn_{z}O₂, x + y + z = 1), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine-type LiMPO₄ (M: Co, Ni, Mn, Fe), conductive polymers such as polyacetylene, polyaniline, polypyrrole, polythiophene and polyacene, and porous carbon may be used singly or as a mixture.

Examples of the separators which may be used include nonwoven fabrics, cloths and microporous films each based on polyolefins such as polyethylene and polypropylene, and combinations of these separators. When the structure of the nonaqueous electrolyte secondary battery that is to be manufactured is such that the positive electrode and the negative electrode are not in direct contact with each other, the separator may not be necessarily used.

For example, the electrolytic solution that is used may be a so-called an organic electrolytic solution that is a solution of a lithium salt such as LiClO₄, LiPF₆, LiAsF₆, LiBF₄ or LiSO₃CF₃ in a single nonaqueous solvent or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate and ethyl acetate.

The structure of the battery of the present invention is not particularly limited but is usually such that the positive electrode, the negative electrode and optionally the separator are wound into a flat coil to form a wound electrode plate assembly, or these members in the form of flat plates are stacked into a laminated electrode plate assembly, and the electrode plate assembly is sealed in an exterior case. Incidentally, half cells used in EXAMPLES of the present invention have a simple structure including a negative electrode based on a silicon-containing active material of the present invention, and a counter electrode including metallic lithium. This structure allows the cycle characteristics of the active material itself to be clearly evaluated. As described hereinabove, it is needless to mention that a small amount of the active material may be added to a mixture based on a graphite active material (capacity: about 340 mAh/g) to enhance cycle characteristics while increasing the negative electrode capacity to a limited level of about 400 to 700 mAh/g which is far above the existing negative electrode capacity.

### <Use applications and other features>

The secondary batteries using the negative electrode active material of the present invention may be used as, although not particularly limited to, paper batteries, button batteries, coin batteries, laminated batteries, cylindrical batteries, prismatic batteries and other types of batteries. The negative electrode active material of the present invention described hereinabove may be applied to all kinds of electrochemical devices which are charged and discharged by the insertion and de-insertion of lithium ions, such as, for example, hybrid capacitors and solid lithium secondary batteries.

### EXAMPLES

Hereinbelow, the present invention will be described in detail based on EXAMPLES. Parts and % are on mass basis unless otherwise specified.

### [Preparation of polysiloxane compound]

(SYNTHETIC EXAMPLE 1: Synthesis of condensate (m-1) of methyltrimethoxysilane) A reaction vessel equipped with a stirrer, a thermometer, a dropping funnel, a condenser tube and a nitrogen gas inlet was charged with 1,421 parts by mass of methyltrimethoxysilane (hereinafter, abbreviated as "MTMS"), and the temperature was raised to 60°C. Next, a mixture of 0.17 parts by mass of iso-propyl acid phosphate ("Phoslex A-3" manufactured by SC Organic Chemical Co., Ltd.) and 207 parts by mass of deionized water was added dropwise to the reaction vessel over a period of 5 minutes. The mixture was stirred at a temperature of 80°C for 4 hours to perform hydrolysis condensation reaction.

The condensate resulting from the above hydrolysis condensation reaction was distilled at a temperature of 40 to 60°C and a reduced pressure of 40 to 1.3 kPa to remove methanol and water formed during the above reaction process. (The reduced pressure at the start of methanol distillation was 40 kPa, and the pressure was finally reduced to 1.3 kPa. The same applies to the reduced pressure conditions described hereinafter.) Consequently, 1,000 parts by mass of a liquid (active ingredient: 70 mass%) was obtained which contained a condensate (m-1) of MTMS having a number average molecular weight of 1,000.

The content of the active ingredient was calculated by dividing the theoretical yield (parts by mass) assuming that all the methoxy groups in the silane monomer, i.e., MTMS, had undergone condensation reaction, by the actual yield (parts by mass) after the condensation reaction [theoretical yield (parts by mass) assuming that all the methoxy groups in the silane monomer had undergone condensation reaction/actual yield (parts by mass) after the condensation reaction].

(SYNTHETIC EXAMPLE 2: Synthesis of polysiloxane compound (PS-1)) A reaction vessel equipped with a stirrer, a thermometer, a dropping funnel, a condenser tube and a nitrogen gas inlet was charged with 150 parts by mass of isopropyl alcohol (hereinafter, abbreviated as "IPA"), 105 parts by mass of phenyltrimethoxysilane (hereinafter, abbreviated as "PTMS") and 277 parts by mass of dimethyldimethoxysilane (hereinafter, abbreviated as "DMDMS"), and the temperature was raised to 80°C.

Next, a mixture including 21 parts by mass of methyl methacrylate, 4 parts by mass of butyl methacrylate, 3 parts by mass of butyl acrylate, 2 parts by mass of 3-methacryloxypropyltrimethoxysilane, 3 parts by mass of IPA and 0.6 parts by mass of tert-butyl peroxy-2-ethylhexanoate was added dropwise to the reaction vessel at the same temperature over a period of 6 hours. After the completion of the dropwise addition, the reaction was further performed at the same temperature for 20 hours to give an organic solvent solution of a vinyl polymer (a-1) containing a hydrolyzable silyl group which had a number average molecular weight of 10,000.

Next, a mixture of 0.04 parts by mass of Phoslex A-3 and 112 parts by mass of deionized water was added dropwise over a period of 5 minutes, and the mixture was stirred at the same temperature for 10 hours to perform hydrolysis condensation reaction. Consequently, a liquid was obtained which contained a composite resin formed by the bonding of the hydrolyzable silyl groups in the vinyl polymer (a-1) and the hydrolyzable silyl groups and silanol groups in the polysiloxane derived from PTMS and DMDMS. Next, 472 parts by mass of the liquid from SYNTHETIC EXAMPLE 1 which contained the condensate (m-1) of MTMS, and 80 parts by mass of deionized water were added to the liquid. The mixture was stirred at the same temperature for 10 hours to perform hydrolysis condensation reaction. The reaction product was then distilled under the same conditions as in SYNTHETIC EXAMPLE 1 to remove methanol and water that had been formed. Next, 250 parts by mass of IPA was added. Thus, 1,000 parts by mass of a solution of a polysiloxane compound (PS-1) having a nonvolatile content of 60.0 mass% was obtained.

### (Fabrication of half battery and measurement of charge/discharge characteristics)

An evaluation half battery was assembled in the following manner using a negative electrode active material of the present invention, and charge/discharge characteristics were measured.

First, a negative electrode mixture slurry was prepared by mixing a negative electrode active material (8 parts), acetylene black as a conductive auxiliary (1 part), an organic binder (1 part) including commercial SBR styrene-butadiene copolymer rubber (0.75 parts) + CMC carboxymethylcellulose (0.25 parts), and distilled water (10 parts), and stirring the mixture for 10 minutes with a planetary mixer Awatori Rentaro.

The slurry was applied with an applicator onto a 20 µm thick copper foil and was dried under reduced pressure at 110°C to form an electrode thin film having a thickness of about 40 µm. The film was punched into a circular electrode having a diameter of 14 mm and was pressed under a pressure of 20 MPa. In a glove box having a low oxygen concentration (< 10 ppm) and an extremely low water content (dew point: not more than -40°C), the electrode of the present invention was opposed to a Li foil as a counter electrode via a 25 µm polypropylene separator, and an electrolytic solution (KISHIDA CHEMICAL Co., Ltd., 1 mol/L LiPF6, diethyl carbonate:ethylene carbonate = 1:1 (by volume)) was adsorbed. An evaluation half battery (CR2032) was thus fabricated.

Battery characteristics were measured using a secondary battery charge/discharge tester (HOKUTO DENKO CORPORATION). Charge/discharge characteristics were tested by performing charging at a constant current and a constant voltage and performing discharging at a constant current under preset conditions where the room temperature was 25°C, the cutoff voltage was in the range of 0.005 to 1.5 V, and the charging/discharging rates were 0.1 C (1st to 3rd cycles) and 0.2 C (4th and later cycles). Each time the charging was switched to discharging, the battery was left in an open circuit for 30 minutes. The initial Coulombic efficiency and cycle characteristics (in the subject application, the capacity retention at the 10th cycle) were determined as follows. Initial Coulombic efficiency (%) = Initial discharging capacity (mAh/g)/Initial charging capacity (mAh/g), Capacity retention (10th) = Tenth discharging capacity (mAh/g)/Initial discharging capacity (mAh/g)

### (EXAMPLE 1)

A negative electrode active material of the present invention was prepared as follows.

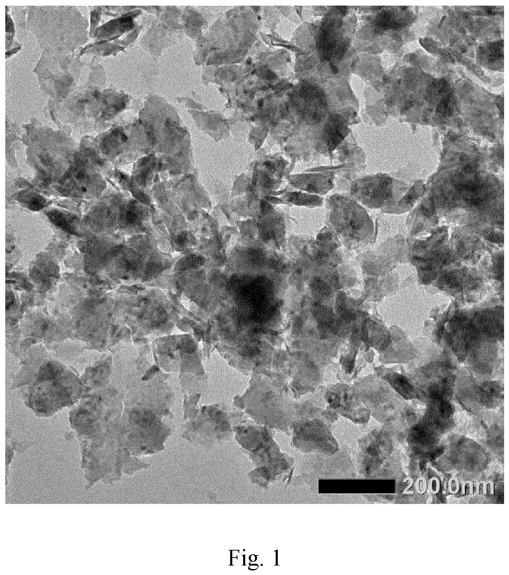

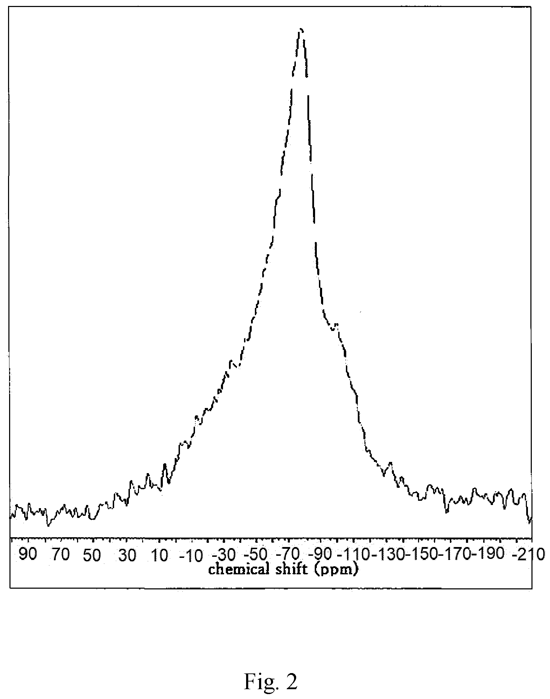

Silicon nanoparticles were obtained by a wet crushing method (bead mill + commercial dispersant). TEM observation (Fig. 1) showed that the silicon particles had a length in the major axis direction of 150 to 300 nm and a thickness of 40 to 70 nm or less. Some of the silicon nanoparticles that had been dried were analyzed by solid-state NMR (²⁹Si). The spectrum obtained showed that a peak centered at -79.8 ppm was broad ranging from 50 ppm to -150 ppm, and the half width was 36 ppm (Fig. 2).

The suspension of the silicon nanoparticles was uniformly mixed together with a silicon organic compound (the polysiloxane obtained in SYNTHETIC EXAMPLE) and a commercial phenol resin in a predetermined ratio (feeding ratio calculated as the composition after firing: SiOC/C/Si = 0.2/0.3/0.5), and the mixture was dried under reduced pressure. The resultant precursor was fired in a nitrogen atmosphere at a high temperature of 1100°C for 6 hours to give a black solid including SiOC/C/Si.

The solid was crushed with a planetary ball mill to give a powdery active material having an average particle size (D50) of 11 µm and a specific surface area (BET) of 15 m²/g. Solid-state NMR (²⁹Si) measurement showed that the equivalent composition ratio of SiC₄ bond structural units (SiC₄/(SiC₄ + SiO₂C₂ + SiO₃C + SiO₄)) was 20%.

The active material was mixed together with a conductive auxiliary and a binder to give a slurry, which was then applied onto a copper foil to form a film. After drying at 110°C under reduced pressure, the film was opposed to a lithium metal foil as a counter electrode. A half battery was thus fabricated. Charge/discharge characteristics were evaluated (cutoff voltage: 0.005 to 1.5 V, charging/discharging rates: 0.1 C (1st to 3rd cycles), 0.2 C (4th and later cycles)).

The measurement resulted in excellent charge/discharge characteristics (1600 mAh/g initial discharging capacity; 85% initial Coulombic efficiency; 88% capacity retention after 10 cycles).

### (EXAMPLES 2 to 8)

Silicon nanoparticles having a major axis length, a thickness and a thickness/length ratio were obtained by slightly changing the silicon nanoparticles production conditions in EXAMPLE 1. All the particles had a ²⁹Si-NMR peak which had a half width of 20 ppm to 50 ppm centered at -80 ppm and was broad ranging from 50 ppm to -150 ppm. The particles had a length in the major axis direction of 70 to 300 nm and a thickness of 15 to 70 nm or less.

The rest of the procedure was the same as in EXAMPLE 1, except that these silicon nanoparticles were used.

### (COMPARATIVE EXAMPLE 1)

The procedure of EXAMPLE 1 was repeated, except that a Si suspension was used which included elemental silicon having the highest ²⁹Si-NMR peak intensity centered at about -80 ppm, a length in the major axis direction of 300 to 1000 nm, and a thickness of not less than 500 nm.

### (COMPARATIVE EXAMPLE 2)

The procedure of EXAMPLE 1 was repeated, except that a Si suspension was used which included elemental silicon having the highest ²⁹Si-NMR peak intensity centered at about -80 ppm, a length in the major axis direction of 30 to 50 nm, and a thickness in the range of 5 to 9 nm.

Table 1 describes sample properties, charge/discharge characteristics and other results of EXAMPLES and COMPARATIVE EXAMPLES. In the table, BET indicates values of BET specific surface area, the initial efficiency indicates values of initial Coulombic efficiency, and the capacity retention @ 10th indicates values of capacity retention after 10 cycles (qualities of cycle characteristics).

**[Table 1]**

| | Si nano-sheet | | | SiC₄ equivalent composition ratio | C% | Particle size D50 µm | BET m²/g | Charging capacity mAh/g | Discharging capacity mAh/g | Initial efficiency % | Capacity retention (%) @ 10th |
|---|---|---|---|---|---|---|---|---|---|---|---|
| | Major axis length nm | Thickness nm | Thickness/length | | | | | | | | |
| Ex. 1 | 150 ∼ 300 | 40 ∼ 70 | 0.24 | 0.2 | 30 | 11 | 15 | 1880 | 1600 | 85 | 88 |
| Ex. 2 | 150 ∼ 300 | 40 ∼ 70 | 0.24 | 0.34 | 45 | 5 | 18 | 1760 | 1480 | 84 | 90 |
| Ex. 3 | 100 ∼ 200 | 30 ∼ 50 | 0.27 | 0.38 | 10 | 7 | 6 | 1630 | 1320 | 81 | 92 |
| Ex. 4 | 100 ∼ 200 | 30 ∼ 50 | 0.27 | 0.43 | 20 | 9 | 7 | 1580 | 1280 | 81 | 92 |
| Ex. 5 | 100 ∼ 200 | 30 ∼ 50 | 0.27 | 0.5 | 40 | 8 | 5 | 1513 | 1210 | 80 | 93 |
| Ex. 6 | 50 ∼ 100 | 15 ∼ 30 | 0.3 | 0.39 | 15 | 6 | 6 | 1403 | 1080 | 77 | 94 |
| Ex. 7 | 50 ∼ 100 | 15 ∼ 30 | 0.3 | 0.53 | 35 | 7 | 5 | 1295 | 1010 | 78 | 95 |
| Ex. 8 | 50 ∼ 100 | 20 ∼ 50 | 0.53 | 0.45 | 35 | 7 | 5 | 1300 | 1025 | 78 | 92 |
| Comp. Ex. 1 | 300 ∼ 1000 | 500 ∼ | 0.6 ∼ | 0.1 | 20 | 10 | 14 | 1827 | 1480 | 81 | 56 |
| Comp. Ex. 2 | 30 ∼ 50 | 5 ∼ 9 | 0.17 | 0.65 | 35 | 8 | 7 | 890 | 550 | 62 | 95 |

The silicon nanoparticles of the EXAMPLES had a ²⁹Si-NMR peak which had a half width of 20 ppm to 50 ppm centered at -80 ppm and was broad ranging from 50 ppm to -150 ppm, and also had a length in the major axis direction of 70 to 300 nm and a thickness of 15 to 70 nm or less. The conventional elemental silicon (COMPARATIVE EXAMPLE 1) had a large thickness and a large length and only had the highest peak intensity in ²⁹Si-NMR centered near -80 ppm. The conventional elemental silicon (COMPARATIVE EXAMPLE 2) had a small thickness and a small length and only had the highest peak intensity in ²⁹Si-NMR centered near -80 ppm. As can be seen from the comparison between EXAMPLES and COMPARATIVE EXAMPLES 1 and 2, greater enhancements in negative electrode performance can be expected when the silicon nanoparticles of the present invention are used in combination with an additional silicon inorganic compound. This stems from the difference in the surface state of silicon and indicates usefulness as an additive for improving the performance of known negative electrode active materials.

Further, for example, a negative electrode active material obtained by firing a mixture containing the above silicon nanoparticles includes SiOC/C/Si, that is, has a structure in which the silicon nanoparticles are embedded in the silicon inorganic compound SiOC, and also satisfies a specific equivalent composition ratio. As clear from the comparison between EXAMPLES and COMPARATIVE EXAMPLES 1 and 2, batteries using such a negative electrode active material attain higher charging/discharging capacities, higher initial Coulombic efficiency and a higher capacity retention (excellent cycle characteristics).

## Claims

1. Silicon nanoparticles for negative electrode active material in lithium ion secondary batteries, wherein the silicon nanoparticles have a length in the major axis direction of 70 to 300 nm and a thickness of 15 to 70 nm or less.

2. The silicon nanoparticles according to Claim 1 for negative electrode active material in lithium ion secondary batteries, wherein the silicon nanoparticles have a thickness/length ratio of not more than 0.5.

3. A negative electrode active material for lithium ion secondary batteries comprising the silicon nanoparticles described in Claim 1 or 2 and a silicon inorganic compound in which the silicon nanoparticles are embedded, the silicon inorganic compound having a ²⁹Si-NMR peak assigned to SiC₄ bond structural units and having an equivalent composition ratio [SiC₄ bonds/(SiC₄ bond structural units + D units (SiO₂C₂) + T units (SiO₃C) + Q units (SiO₄))] in the range of 0.05 to 0.55.

4. The negative electrode active material for lithium ion secondary batteries according to Claim 3, wherein the weight loss by pyrolysis in air up to 1000°C is in the range of not less than 5 mass% and not more than 60 mass%.

5. The negative electrode active material for lithium ion secondary batteries according to Claim 3 or 4, wherein the volume average particle size (D50) is 1.0 µm to 20 µm, and the specific surface area determined by nitrogen adsorption measurement is 1.0 m²/g to 20 m²/g.

6. A negative electrode for lithium ion secondary batteries comprising the negative electrode active material for lithium ion secondary batteries described in any one of Claims 3 to 5.

7. A lithium ion secondary battery comprising the negative electrode described in Claim 6.

## Patentansprüche

1. Silizium-Nanopartikel für ein aktives Material einer negativen Elektrode in Lithiumlonen-Sekundärbatterien, wobei die Silizium-Nanopartikel eine Länge in Hauptachsenrichtung von 70 bis 300 nm und eine Dicke von 15 bis 70 nm oder weniger aufweisen.

2. Silizium-Nanopartikel gemäß Anspruch 1 für ein aktives Material einer negativen Elektrode in Lithium-Ionen-Sekundärbatterien, wobei die Silizium-Nanopartikel ein Dicke-/Längen-Verhältnis von nicht mehr als 0,5 aufweisen.

3. Aktives Material einer negativen Elektrode für Lithium-Ionen-Sekundärbatterien, das die in Anspruch 1 oder Anspruch 2 beschriebenen Silizium-Nanopartikel und eine anorganische Siliziumverbindung umfasst, in die die Silizium-Nanopartikel eingebettet sind, wobei die anorganische Siliziumverbindung einen ²⁹Si-NMR-Peak, der SiC₄-Bindungsstruktureinheiten zugeordnet ist, aufweist und ein äquivalentes Zusammensetzungsverhältnis [SiC₄-Bindungen / (SiC₄-Bindungsstruktureinheiten + D-Einheiten (SiO₂C₂) + T-Einheiten (SiO₃C) + Q-Einheiten (SiO₄))] in einem Bereich von 0,05 bis 0,55 aufweist.

4. Aktives Material einer negativen Elektrode für Lithium-Ionen-Sekundärbatterien gemäß Anspruch 3, wobei der Gewichtsverlust durch Pyrolyse in Luft bis zu 1000°C in einem Bereich von nicht weniger als 5 Massen-% und nicht mehr als 60 Massen-% liegt.

5. Aktives Material einer negativen Elektrode für Lithium-Ionen-Sekundärbatterien gemäß Anspruch 3 oder Anspruch 4, wobei die volumengemittelte Partikelgröße (D50) 1,0 µm bis 20 µm beträgt und die mittels Stickstoffadsorptionsmessung bestimmte spezifische Oberfläche 1,0 m²/g bis 20 m²/g beträgt.

6. Negative Elektrode für Lithium-Ionen-Sekundärbatterien, die das in einem der Ansprüche 3 bis 5 beschriebene aktive Material einer negativen Elektrode für Lithium-Ionen-Sekundärbatterien umfasst.

7. Lithium-Ionen-Sekundärbatterie, die die in Anspruch 6 beschriebene negative Elektrode umfasst.

## Revendications

1. Nanoparticules de silicium destinées au matériau actif de l'électrode négative dans les batteries secondaires à ions lithium, dans lesquelles les nanoparticules de silicium ont une longueur dans la direction de l'axe principal comprise dans la plage allant de 70 à 300 nm et une épaisseur comprise dans la plage allant de 15 à 70 nm ou moins.

2. Nanoparticules de silicium selon la revendication 1 destinées au matériau actif d'électrode négative dans les batteries secondaires à ions lithium, dans lesquelles les nanoparticules de silicium présentent un rapport épaisseur/longueur inférieur ou égal à 0,5.

3. Matériau actif d'électrode négative destiné aux batteries secondaires à ions lithium comprenant les nanoparticules de silicium décrites dans la revendication 1 ou la revendication 2 et un composé inorganique de silicium dans lequel les nanoparticules de silicium sont incorporées, le composé inorganique de silicium ayant un pic de RMN ²⁹Si attribué aux unités structurelles de liaison SiC₄ et ayant un rapport de composition équivalent [liaisons SiC₄ / (unités structurelles de liaison SiC₄ + unités D (SiO₂C₂) + unités T (SiO₃C) + unités Q (SiO₄))] compris dans la plage allant de 0,05 à 0,55.

4. Matériau actif d'électrode négative destiné aux batteries secondaires à ions lithium selon la revendication 3, dans lequel la perte de poids par pyrolyse dans l'air jusqu'à 1000 °C est comprise dans la plage allant de 5 % en masse au minimum à 60 % en masse au maximum.

5. Matériau actif d'électrode négative destiné aux batteries secondaires à ions lithium selon la revendication 3 ou la revendication 4, dans lequel la taille moyenne des particules en volume (D₅₀) est comprise dans la plage allant de 1,0 µm à 20 µm, et la surface spécifique déterminée par mesure d'adsorption d'azote est comprise entre 1,0 m²/g et 20 m²/g.

6. Electrode négative destinée aux batteries secondaires à ions lithium comprenant le matériau actif d'électrode négative destiné aux batteries secondaires à ions lithium décrit dans l'une quelconque des revendications 3 à 5.

7. Batterie secondaire à ions lithium comprenant l'électrode négative décrite dans la revendication 6.
